(19) Europäisches Patentamt
European Patent Office
Office européen des brevets

(11) Publication number: **0 627 578 A2**

(12) # EUROPEAN PATENT APPLICATION

(21) Application number: **94108455.0**

(51) Int. Cl.$^5$: **F16H 61/02**

(22) Date of filing: **01.06.94**

(30) Priority: **03.06.93 JP 156396/93**

(43) Date of publication of application:
**07.12.94 Bulletin 94/49**

(84) Designated Contracting States:
**DE GB**

(71) Applicant: **AISIN AW CO., LTD.**
**10, Takane**
**Fujiicho**
**Anjo-shi Aichi-ken (JP)**

(72) Inventor: **Ando, Masahiko**
**10, Takane,**
**Fujii-cho**
**Anjo-shi, Aichi-ken (JP)**
Inventor: **Fukatsu, Akira**
**10, Takane,**
**Fujii-cho**
**Anjo-shi, Aichi-ken (JP)**
Inventor: **Yamamoto, Yoshihisa**
**10, Takane,**
**Fujii-cho**
**Anjo-shi, Aichi-ken (JP)**
Inventor: **Niimi, Mamoru**
**10, Takane,**
**Fujii-cho**
**Anjo-shi, Aichi-ken (JP)**
Inventor: **Iwatsuki, Kunihiro**
**1, Toyota-cho**
**Toyota-shi, Aichi-ken (JP)**
Inventor: **Kimura, Hiromichi**
**1, Toyota-cho**
**Toyota-shi, Aichi-ken (JP)**
Inventor: **Oba, Hidehiro**
**1, Toyota-cho**
**Toyota-shi, Aichi-ken (JP)**
Inventor: **Hojo, Yasuo**
**1, Toyota-cho**
**Toyota-shi, Aichi-ken (JP)**
Inventor: **Kaigawa, Masato**
**1, Toyota-cho**
**Toyota-shi, Aichi-ken (JP)**

(74) Representative: **VOSSIUS & PARTNER**
**Siebertstrasse 4**
**D-81675 München (DE)**

(54) **Hydraulic control system for automatic transmission.**

(57) A brake (B-3) in a transmission has a discharge line (Ld) connected to a drain line via a 3-4 shift valve (22). An electronic control unit has means for determining tie-up of brakes (B-3,B-2) on the basis of detection signals from various sensors arranged for shifting in a gear shift mechanism. Responsive to an output from the tie-up detecting means, a 4th speed signal is outputted to the 3-4 shift valve (22) to temporarily change only a hydraulic circuit into a 4th speed state, so that the release-side brake (B-3) is promptly released by draining hydraulic pressure through the 3-4 shift valve (22) without flowing through a 2-3 timing valve (23).

EP 0 627 578 A2

Fig.1

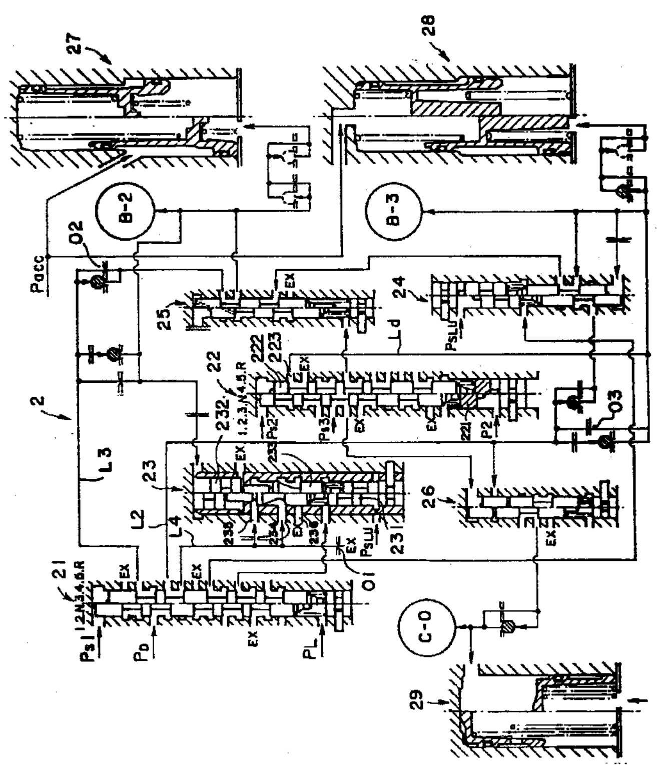

This invention relates to an automatic transmission, and especially to a hydraulic control system for engaging or releasing frictional engagement elements in a gear shift mechanism to shift the automatic transmission.

In an automatic transmission, it has heretofore been needed, in some instances, to simultaneously perform engagement and/or release of two frictional engagement elements, in other words, so-called gear change operations upon shifting between particular speed stages. In such instances, the torque of an output shaft suddenly drops due to tie-up or engine racing occurs due to an underlap, unless the timing of the operations is appropriately controlled. With a view toward avoiding such problems, it has heretofore been the common practice to arrange one-way clutches in parallel with the respective frictional engagement elements so that while using the one-way clutches for releasing the corresponding frictional engagement elements, the timing of the gear change operations is automatically maintained well by controlling hydraulic pressure only on engaged sides.

On the other hand, a construction may be adopted without the above one-way clutches so that the gear shift mechanism can be constructed compact. As one example of such constructions, there is the technique disclosed in Japanese Patent Application Laid-Open (Kokai) No. HEI 1-224553, in which shifting between the 2nd speed and the 3rd speed (hereinafter abbreviated as "2-3 shift". This applies equally to other shifts) and 3-4 shift are performed without one-way clutches. In this transmission, to precisely perform, upon 2-3 shift, gear change operations of the corresponding frictional engagement elements (the clutches in this example), a timing valve is arranged in a hydraulic control system so that feeding of hydraulic pressure to both the clutches or discharge of hydraulic pressure from both the clutches can be conducted by a single directional control valve. Further, to ensure the above shift even if the valve should become inoperative due to sticking or the like, the hydraulic pressure on each discharge side can still be drained separately from an oil line, which is arranged in parallel with the directional control valve, via a small-diameter orifice.

According to the technique disclosed in the above patent publication, however, there is obviously a limitation to the amount of hydraulic pressure to be discharged through the small-diameter orifice so that the technique is hardly effective for the prevention of tie-up in the event of a failure of the directional control valve. If such tie-up takes place, a large shift shock occurs and moreover, the heat load (transmitted torque x revolution number) to the frictional engagement element on each engaged side becomes extremely large, resulting in a substantial reduction to the durability of the corresponding clutch.

An object of the present invention is therefore to provide a hydraulic control system for an automatic transmission with some one-way clutches omitted to make compact a gear shift mechanism, which hydraulic control system can perform engagement or release of each frictional engagement element without occurrence of over tie-up even when operation of a directional control valve therefor is not proper.

In one aspect of the present invention, there is thus provided a hydraulic control system for an automatic transmission, said hydraulic control system being composed of a gear shift mechanism having a first frictional engagement element adapted to be engaged to achieve a particular first speed stage and a second frictional engagement element adapted to be engaged to achieve a second speed stage faster than and closest to the first speed stage, a hydraulic control unit for controlling engagement or release of said first and second frictional engagement elements of said gear shift mechanism by feeding hydraulic pressure thereto or discharging hydraulic pressure therefrom, and an electronic control unit for controlling said hydraulic control unit by solenoid signals, said hydraulic control unit having a first directional control valve for switching feeding of hydraulic pressure to one of said first and second frictional engagement elements and discharge of hydraulic pressure from the other responsive to a first solenoid signal outputted from said electronic control unit and a second directional control valve adapted to be switched by a second solenoid signal outputted from said electronic control unit to achieve a third speed stage still faster than the second speed stage. Said first frictional engagement element has a discharge line is connected to a drain line via said second directional control valve. Said electronic control unit has tie-up detection means for determining tie-up of both the frictional engagement elements from a detection signal from gear shift sensor means, whereby upon detection of tie-up by said tie-up detection means, said second solenoid signal is outputted to said second directional control valve.

In the present invention which has adopted such a construction as described above, a second solenoid signal is outputted to the second directional control valve when both the frictional engagement elements are determined by the time-up detecting means to have undergone over tie-up. As a result, the first frictional engagement element is connected at the discharge like thereof to the drain line via the second directional control valve, so that the pressure released from the first frictional engagement element is promptly drained from the discharge line via the second directional control valve irrespective of operation of the first directional control valve. Consequently, over tie-up between frictional engagement elements for the first and second speed stages can be avoided no matter whether the operation of the first directional control valve is good or not.

In an automatic transmission in which one-way clutches arranged in parallel with frictional engagement elements for the first and second speed stages have been omitted to make a gear shift mechanism compact, the present invention has made it possible to perform engagement or release of these frictional engagement elements without occurrence of over tie-up even if directional control valves for the control of gear change operations are not in order. This has made it possible to reduce shift shocks by avoiding drops in the torque of an output shaft due to tie-up and also to improve the durability of the frictional engagement elements by reducing head lead to them.

FIG. 1 is a fragmentary circuit diagram of a hydraulic control system according to one embodiment of the present invention, which is suited for use in an automatic transmission;

FIG. 2 is a system diagram of the overall construction of the automatic transmission, showing a gear shift mechanism portion in skeleton and the remaining portion in blocks;

FIG. 3 is a gear engagement diagram of the automatic transmission;

FIG. 4 is a block diagram of a tie-up detecting means in the automatic transmission;

FIG. 5 is a shift characteristic diagram of the automatic transmission;

FIG. 6 is a shift characteristic diagram upon occurrence of tie-up;

FIG. 7 is a flow chart showing a control flow by the tie-up detecting means; and

FIGS. 8(A) to 8(C) diagrammatically illustrate a method for setting a boundary value by boundary value setting means.

The one embodiment of this invention will hereinafter be described with reference to the accompanying drawings. FIG. 1 through FIG. 8 show the one embodiment of this invention. The automatic transmission comprises, as depicted in FIG. 2, a gear shift mechanism having a first frictional engagement element (a brake in this embodiment) B-3 adapted to be engaged to achieve a specific first speed stage (the 2nd speed in this embodiment) and a second frictional engagement element (another brake in this embodiment) B-2 adapted to be engaged to achieve a second speed stage (the 3rd speed in this embodiment) higher than and closest to the 2nd speed; a hydraulic control unit 2 for controlling engagement or release of the brakes B-3 and B-2 of the gear shift mechanism by feeding hydraulic pressure thereto or draining hydraulic pressure therefrom; and an electronic control unit (ECU) 3 for controlling the hydraulic control device by solenoid signals. Incidentally, the electronic control unit 3 is provided with a group of various sensor 4 in association with various rotary elements in the gear shift mechanism so that the state of the gear shift mechanism can be transmitted.

As is illustrated in FIG. 1, the hydraulic control unit 2 has, in a hydraulic circuit thereof, a first directional control valve (a 2-3 timing valve in this embodiment) 23 and a second directional control valve (a 3-4 shift valve in this embodiment). The first directional control valve 23 is switched upon application of hydraulic pressure thereto from a 2-3 shift valve 21 which is in turn switched by a first solenoid signal (namely, a 3rd speed signal) outputted from the electronic control unit 3 to a solenoid valve SL1. On the other hand, the second directional control valve 22 is switched by a second solenoid signal outputted from the electronic control unit 3 to a solenoid valve SL2 to achieve the 4th speed.

According to the subject matter of the present invention, the first frictional engagement element (the brake in this embodiment) B-3 is at a discharge line Ld thereof connected to a drain line via the second directional control valve (the 3-4 shift valve in this embodiment) 22. The electronic control unit 3 has tie-up detecting means for determining tie-up of both the frictional engagement elements (the brakes in this embodiment) on the basis of detection signals from the sensors 4 which are arranged for gear shifts in the gear shift mechanism 1 (see FIG. 4, and specifically a program stored in the electronic control unit 3). Responsive to an output from the tie-up detecting means, a second solenoid signal (namely, a 4th signal") is outputted to the second directional control valve (the 3-4 shift valve in this embodiment) 22.

These individual portions will hereinafter be described one after one. As is depicted in FIG. 2, the gear shift mechanism 1 has, in the illustrated embodiment, a 5 speed construction which is a combination of a secondary shifting unit OD formed of an inlet-side overdrive planetary gear unit ("the planetary gear unit" will hereinafter be abbreviated as "the gear unit" in the description of the embodiment) and a 4-forward/1-reverse primary shifting unit M formed of an in-line train of three planetary gears.

In addition to the secondary shifting unit OD and the primary shifting unit M described above, the gear shift mechanism 1 is also provided with a torque converter T with a lockup clutch. The secondary shifting unit OD is equipped with a one-way clutch F-0 in association with a sun gear S0, a carrier C0 and a ring gear R0, a multiplate clutch C-) arranged in parallel with the one-way clutch F-0, and a multi-plate brake B-0 arranged in series with the multi-plate clutch C-0. The primary shifting unit M, on the other hand, is provided with an in-line train of three sets of gear units P1-P3 constructed by suitably connecting in series various shifting elements which comprise sun gears S1-S3, carriers C1-C3 and ring gears R1-R3. Arranged in association with the shifting elements of the respective gear units are multi-plate clutches C-1,C-2, a band brake B-1, multi-plate brakes B-2 to B-4 and one-way clutches F-1,F-2. Although not illustrate in the drawings, the clutches and brakes are each provided with servo means having a piston which either engages or releases a friction material of the corresponding clutch or brake under control of servo hydraulic pressure.

In the above gear shift mechanism, input revolutions from an unillustrated engine are transmitted via the torque converter T to an input shaft I of the secondary shifting unit OD. When the clutch C-0 is engaged to lock up the secondary shifting unit OD, the clutch C-1 of the primary shifting unit M is engaged and the other frictional engagement elements are all released as illustrated in FIG. 3, revolutions of the input shaft I are in turn transmitted to the sun gear S3 of the gear unit P3 and as a result of prevention of reverse revolutions of the ring gear R3 by the one-way clutch F-2, are then outputted as 1st speed revolutions from the carrier C3 to an output shaft O.

Next, 2nd speed revolutions are achieved when the secondary shifting unit OD has been locked up and the clutch C-1 and, as the first frictional engagement element in the present invention, the brake B-3 have engaged. At this time, an input transmitted to the ring gear R2 of the gear unit P2 is outputted to the carrier C2 of the gear unit P2 and hence to the ring gear R1 of the gear unit P1, said ring gear R1 being connected directly to said carrier C2, while using the carrier C1 of the gear unit P1 as a reaction force element.

Further, 3rd speed revolutions are achieved when the secondary shifting unit OD has been similarly locked up, the clutch C-1 and, as the second frictional engagement element in the present invention, the brake B-2 have engaged and the other frictional engagement elements have been released. At this time, an input transmitted to the ring gear R2 of the gear unit P2 is outputted to the carrier C2 while using the sun gear S2 as a reaction force element.

In addition, 4th speed revolutions are achieved when the secondary shifting unit OD has been similarly locked up and both the clutches C-1 and C-2 have engaged. At this time, the revolutions are inputted to the ring gear R2 and also to the sun gear S2 so that the gear unit P2 is locked up to output the inputted revolutions as are. Furthermore, 5th speed revolutions are achieved by maintaining the primary shifting unit M in the same state as for the 4th speed revolutions, releasing the clutch C-0, engaging the brake B-0 to fix the sun gear S0 and causing the secondary shifting unit OD to rotate at an increased speed. On the other hand, a reverse range is achieved by maintaining the secondary shifting unit OD in the above-described state and engaging the clutch C-2 and brake B-4 of the primary shifting unit M. At this time, an input transmitted to the sun gear S2 of the gear unit P2 is out-putted as reverse revolutions of the carriers C2,C3 of the gear units P2,P3 while using the ring gear R3 as a reaction force element.

Since the hydraulic control system can adopt a conventionally-known general construction except for the parts shown in FIG. 1 and pertaining to the subject matter of the present invention, its overall description and illustration are omitted herein. It is however to be noted that a gear shift circuit portion for controlling engagement or release of the individual frictional engagement elements, namely, the brakes and clutches in the gear shift mechanism has shift valves corresponding to the respective speed stages, including the above-described shift valves, between a manual valve for receiving a supply of line pressure and servo means for the individual frictional engagement elements.

Also arranged are a pressure control valve for regulating an SLN signal pressure outputted (described specifically, the term "a signal pressure outputted" means that a signal pressure is produced without drainage) by a linear solenoid valve SLN based on an each range pressure as a base pressure during shifting to produce a control pressure, an engine brake relay valve for switching feeding/discharge of line pressure with respect to the clutch C-0 a C-O exhaust valve 26 for switching feeding/discharge of line pressure with respect to the clutch C-0, a solenoid valve SL1 for outputting a switching signal pressure to the 2-3 shift valve 21, a solenoid valve SL2 for outputting a switching signal pressure to the 1-2 shift valve, a solenoid valve SL3 for outputting a switching signal pressure to the C-O exhaust valve 26 via the 1-2 shift valve, a solenoid valve SL4 for outputting a switching signal pressure to the C-O exhaust valve 26, and a linear solenoid valve SLN for outputting a signal pressure for the regulation of the pressure control valve. Further, the individual brakes other than the brakes B-1 and B-4 are provided with accumulators, respectively. Incidentally, symbol SLU in FIG. 2 indicates a solenoid valve for outputting lockup signals.

The 2-3 timing valve 23 is constructed of a pressure regulator which has a spool 233 maintained at one end thereof in contact with a piston 231 via a spring and at an opposite end thereof in contact with a plunger 232. To the piston 231, a solenoid signal pressure $P_{SLU}$ from the solenoid valve SLU and a control pressure via the 2-3 shift valve 21 are applied in opposition to each other, while the pressure of a line L3 is applied to the plunger 232. A pressure regulation port 234 and a signal port 235 of the timing valve 23 are connected to a line L4, and the line L4 is connected to the drain line through a small-diameter orifice 01.

The 2-3 shift valve 21 is constructed of a directional control valve having a spring-loaded spool. By applying a signal pressure Ps1 from the solenoid valve SL1 and an L range pressure $P_L$, switching of feeding of a D range pressure $P_D$ from the line L2 to the line L3 and vice versa as well as switching of communication of the line L2 to the line L4, etc. are effected.

The 3-4 shift valve 22 is constructed of a directional control valve having a spool 222 spring-loaded via a piston 221, and receives at one end thereof a signal pressure Ps2 from the solenoid valve SL2. By a 2-range pressure and the D range pressure via the shift valve 21, the 3-4 shift valve 22 controls transmission or cut-off of a signal pressure from the solenoid valve SL3 to the 4-5 shift valve, communication or shut-off of the line of the clutch C-2, feeding of a control pressure to the brake B-2 and discharge of the control pressure from the brake. The 3-4 shift valve 22 is also provided with a port 223 which is connected to a discharge line Ld which relates to the subject matter of the present invention. This port 223 is either blocked or connected to the drain line as a result of movement of the spool 222.

In the diagram, there are also shown a B-3 control valve 24, a B-2 orifice control valve 25, a C-0 exhaust valve 26, a B-2 brake accumulator 27, a B-3 brake accumulator 28, and a C-0 clutch accumulator 29. They are not directly related to the subject matter or the present invention so that description of their specific constructions and actions is omitted herein. The positional difference of each valve relative to a central line thereof in the diagram indicates both limits of displacements of the associated spool. Especially with respect to each of the shift valves, numerals are divided to the left and right sides of the central line, respectively, so that spool positions are correlated to the corresponding gear positions.

FIG. 4 illustrates, but does not limit to, one example of the tie-up detecting means for detecting tie-up from the number of revolutions of the output shaft and that of revolutions of the input shaft. The illustrated tie-up detecting means is constructed of an output shaft revolution sensor 41 out of the group of various sensors 4 shown in FIG. 2 and adapted to detect the number [$N_O$(i)] of output revolutions from the output shaft O, an input shaft revolution sensor 42 for detecting the number [$N_T$-(i)] from the input shaft I out of the group of various sensors 4 shown in FIG. 2, the electronic control unit 3, and directional control valve actuating means (specifically, the solenoid valve SL2 in the hydraulic control unit 2). The electronic control unit 3 includes, as a program, over tie-up detecting means, boundary value setting means and speed stage switching means.

In the automatic transmission constructed as described above, the respective clutches and brakes in the gear shift mechanism, although not described one by one, are controlled as shown in FIG. 3 according to mechanical selection of the positions of the manual valves 2 in the hydraulic control unit 2 and regulation of range pressures and on/off of the solenoid valves SL1-SL4 by electronic control corresponding to the vehicle speed and engine load (for example, the throttle opening), whereby in association with the one-way clutches, the respective gear stages are obtained and the engine brake is actuated according to the gear stages. In the diagram, O indicates "engaged", O "engaged upon application of an engine brake", O "engaged but irrelevant to the transmission of power", and others "released".

In this automatic transmission, the 2-3 shift valve 21 shown in FIG. 1 is in the left-half position at the 2nd speed, so that a D range pressure $P_D$ corresponding to the position of the manual valve is fed to the brake B-3 through the 2-3 shift valve 21, the line L2 and the orifice O3 and the accumulator 28 is in an accumulated state. At this time, the discharge line Ld is blocked by a land of the spool 222 which is in the left-half position of the 3-4 shift valve 22, and is cut off from the drain line.

When a 3rd speed signal is outputted in this state, the 2-3 shift valve 21 is switched to assume the right-hand position. As a result, the D-range pressure $P_D$ is fed to the brake B-2 and the accumulator 27 via the line L3, an orifice O2 and the B-2 orifice control valve 25. On the other hand, the line L2 is communicated to the line L4 so that drainage of hydraulic pressure from the brake B-3 and its accumulator 28 begins. If the 2-3 timing valve 23 is operating in order at this time, the pressure fed to the brake B-2 is applied to the plunger 232 and the spool 233 and the pressure of the brake B-3 is discharged primarily through a drain port 236 under regulation by the spool 233. During such an operation, data of various parts of the transmission show such characteristics as shown by dashed lines in FIG. 5, in which $N_T$ indicates the number of revolutions of the input shaft, $T_O$ the torque of the output shaft, $T_{Re}$ the torque on the released side, $P_{Re}$ the pressure on the released side, $P_{Ap}$ the pressure on the applied side, and $q_{Ap}$ the heat capacity on the applied side.

If the operation of the 2-3 timing valve 23 becomes out of order due to sticking or the like, the spool 233 does not undergo such downward movement as shown in the right-half portion thereof in FIG. 1, thereby failing to perform such smooth drain discharge as described above. Drainage therefore takes place through the small-diameter orifice O1, so that such a characteristic of a tie-up state as indicated by a solid line in FIG. 5 appears. Namely, the drop in the input revolution number $N_T$ after the torque phase $F_T$ does not take place. As a result, the applied-side heat capacity $q_{Ap}$ increases as indicated by an alternate long and shot dash line so that - compared with the heat capacity to be applied when the 2-3 timing valve 23 is in order, said heat capacity being indicated by a dashed line - an excess thermal load is applied as much as that indicated by hatching. In this embodiment, an operation is therefore performed in accordance with the subject matter of the present invention so that upon output of a 4th speed signal from the speed stage switching means of the electronic control unit 3, the 3-4 shift valve 22 is switched to the position shown in the right-half portion thereof in the diagram by a solenoid signal pressure $P_{S2}$ produced when the directional control valve actuating means, i.e., the solenoid valve SL2 is turned off.

Details of this shifting operation can be illustrated as shown in the flow chart of FIG. 7. First, in step 1, a 3rd speed solenoid signal is outputted upon determination of an upshift to the 3rd speed. In other words, the solenoid SL1 is turned off and the 2-3 shift valve 21 is switched to the position shown in the right-half portion in FIG. 1. In step 2, next, an input revolution number $N_T1$ is calculated by multiplying an output revolution number $N_O(i)$ at the time of i with a 2nd speed gear ratio $i_1$. Using the input revolution number $N_T1$ obtained above in step 2, the input revolution number $N_T(i)$ at the time of (i) detected by the input shaft revolution sensor 42 and a constant $\alpha$ (for example 50 rpm), it is then determined in step 3 whether engine racing (premature release of an engagement element on the released side) has occurred or not. In step 4, it is similarly determined whether an inertia phase $F_1$ has initiated or not. When neither engine racing nor initiation of the inertia phase $F_1$ is determined, an angular acceleration (a change in the revolution number) $dN_O(i)$ is determined in step 5. In step 6, the total angular acceleration $dN_Ot$ from the output of the 2-3 upshift signal is determined. In step 7, the preceding steps 2-7 are repeated in a loop when time $T_1$ started upon production of a 3rd speed output has not elapsed. When the time $T_1$ has elapsed, an average value dNA is determined in step 8 by using the value obtained in step 6. Using the angular acceleration $dN_O(i)$ at the time of i, the total angular acceleration $dN_Ot$ and a constant (a boundary value for the determination of tie-up) $\triangle N_O1$ (the manner of whose determination will be described subsequently herein), it is then determined in step 9 whether over tie-up has taken place or not. In step 10 and step 11, when over tie-up is determined in step 9, time $T_2$ is started and until the time $T_2$ elapses, the solenoid valve SL2 is maintained off to output a 4th speed signal. In step 12, the speed signal is returned to the 3rd speed signal.

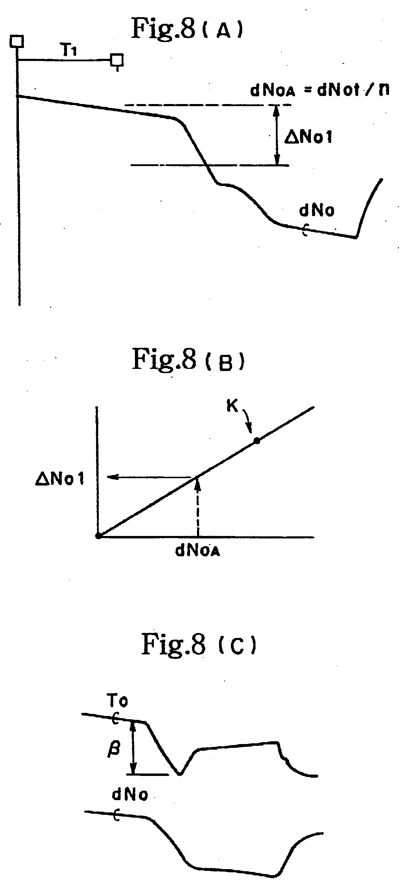

Now, a description will be made of how to determine the boundary value $\triangle N_O1$ by the boundary value setting means. In step 9 of the above flow, a relationship between the time $T_1$ and the angular acceleration (a change in the revolution number) $dN_O$ can illustrated as shown in FIG. 8(A). Occurrence of over tie-up is determined when the average acceleration $dN_OA$ ( = $dN_Ot/n$) during the time $T_1$ has exceeded the boundary value $\triangle N_O1$. Here, the angular acceleration $dN_O$ in the gear shift mechanism is obtained from a drop $\beta$ in the torque phase $F_T$ of the output shaft torque $T_O$ as depicted in FIG. 8(C), because in the torque phase $F_T$,the drop $\beta$ in the output shaft torque $T_O$ is determined by an input torque (the output shaft torque $T_O$ is proportional to the input torque) and the angular acceleration $dN_O$ is proportional to the output shaft torque $T_O$. The boundary value $\triangle N_O1$ for the average acceleration $dN_OA$ is set according to a proportional relationship which is based on a constant K obtained by actually measuring changes in the revolution number through a test [see FIG. 8(B)].

By such operations as described above, such a shift characteristic as shown by a solid line in FIG. 6 is obtained, whereby shifting substantially comparable with a characteristic when the 2-3 timing valve is in order, said characteristic being indicated by a dashed line, is assured. Needless to say, upon output of a 4th speed signal as described above, the circuit of the hydraulic control device 2 is switched to the state of the 4th speed and an operation to engage the clutch C-2 is attempted. Actually, however, the gear shift mechanism 1 is not switched into the state of the 4th speed because owing to the setting of the time $T_2$, the time during which the 4th speed signal is outputted is limited within such a range that no actual engaging operation be performed by the end of a piston stroke of the servo means for the clutch C-2.

In summary, if the operation of the 2-3 timing valve 23 becomes improper due to sticking or the like upon 2-3 shifting, the illustrated embodiment can avoid application of an excessive thermal load to the engaged-side frictional engagement element B-2 due to over tie-up by temporarily changing the hydraulic circuit into the state of the 4th speed and promptly releasing the released-side frictional engagement element B-3 upon detection of the over tie-up, so that the gear shift mechanism is protected from durability deterioration, seizure and the like. Since the various sensors 4, the electronic control unit 3 and the various valves in the hydraulic control unit 2, which are require to perform the control described above, have all been incorporated in a conventional automatic transmission, it is unnecessary to add any significant new element to the transmission to perform the above operations. It is possible to perform them by simply modifying the program of the electronic control unit 3 and the configurations of the 3-4 shift valve and also adding the discharge line $L_d$.

The present invention has been described in detail on the basis of the embodiment applied to the 5-speed automatic transmission. It is however to be noted that the application of the present invention is not limited to such a transmission. To detect tie-up, other detections such as the following detections can also be contemplated:

(1) Detection of too much time from the output of a shift signal until the speed of revolutions begins to change.

(2) Detection of an output torque and an acceleration of an internal member of a transmission equal to or smaller than predetermined values, respectively, relative to an input torque.

(3) Detection of an accumulator stroke of an engaged-side frictional engagement element equal to or greater than a predetermined value.

(4) Detection of forward or rearward acceleration G of a vehicle, twisting of a power plant, thrust of a planetary gear, or the like.

As is understood from the foregoing, the specific constructions of the individual parts are not limited to the above embodiment but can be modified or changed in various ways within the scope of the claims.

## Claims

1. A hydraulic control system for an automatic transmission, said hydraulic control system being composed of a gear shift mechanism (1) having a first frictional engagement element (B-1) adapted to be engaged to achieve a particular first speed stage and a second frictional engagement element (B-2) adapted to be engaged to achieve a second speed stage faster than and closest to the first speed stage, a hydraulic control unit (2) for controlling engagement or release of said first and second frictional engagement elements of said gear shift mechanism by feeding hydraulic pressure thereto or discharging hydraulic pressure therefrom, and an electronic control unit (3) for controlling said hydraulic control unit by solenoid signals, said hydraulic control unit (2) having a first directional control valve (23) for switching feeding of hydraulic pressure to one of said first and second frictional engagement elements (B-3,B-2) and discharge of hydraulic pressure from the other responsive to a first solenoid signal outputted from said electronic control unit (3) and a second directional control valve (22) adapted to be switched by a second solenoid signal out-putted from staid electronic control unit (3) to achieve a third speed stage still faster than the second speed stage, the improvement wherein said first frictional engagement element (B-3) has a discharge line (Ld) is connected to a drain line via said second directional control valve (23); and said electronic control unit (3) has tie-up detection means for determining tie-up of both the frictional engagement elements (B-3,B-2) from a detection signal from gear shift sensor means (4), whereby upon detection of tie-up by said tie-up detection means, said second solenoid signal is out-putted to said second directional control valve (22).

2. A hydraulic control system according to claim 1, wherein said hydraulic control unit (2) has directional control valve actuation means (SL2) for actuating, responsive to the second solenoid signal from said electronic control unit (3), said second directional control valve (22) to a position to achieve the third speed stage; and said second directional control valve (22) communicates said discharge line (Ld) and said drain line with each other upon application of a solenoid signal pressure from said directional control valve actuation means (SL2).

3. A hydraulic control system according to claim 1 or 2, wherein said electronic control unit (3) has speed stage switching means for outputting the second solenoid signal upon detection of the tie-up to achieve the third speed stage.

4. A hydraulic control system according to claim 3, wherein said speed stage switching means has timer means for outputting the second solenoid signal upon elapse of a predetermined time after the output of the second solenoid signal.

5. A hydraulic control system according to claim 4, wherein the predetermined time of said timer means is set in a range so that the third speed stage is not achieved.

6. A system according to any one of claims 1 to 5, wherein said sensor means (4) comprises an input shaft revolution sensor (42) for detecting the number of revolutions of an input shaft (I) and an output shaft revolution sensor (41) for detecting the number of revolutions of an output shaft (O).

**7.** A hydraulic control system according to claim 6, wherein said electronic control unit (3) has means for setting a boundary value for the determination of the tie-up on the basis of the number of revolutions of the output shaft (O) detected by said output shaft revolution sensor (41), whereby over tie-up is detected based on the boundary value, the number of revolutions of the input shaft (I) from the input shaft revolution sensor (42) and the number of revolutions of the output shaft (O) from the output shaft revolution sensor (41).

Fig.1

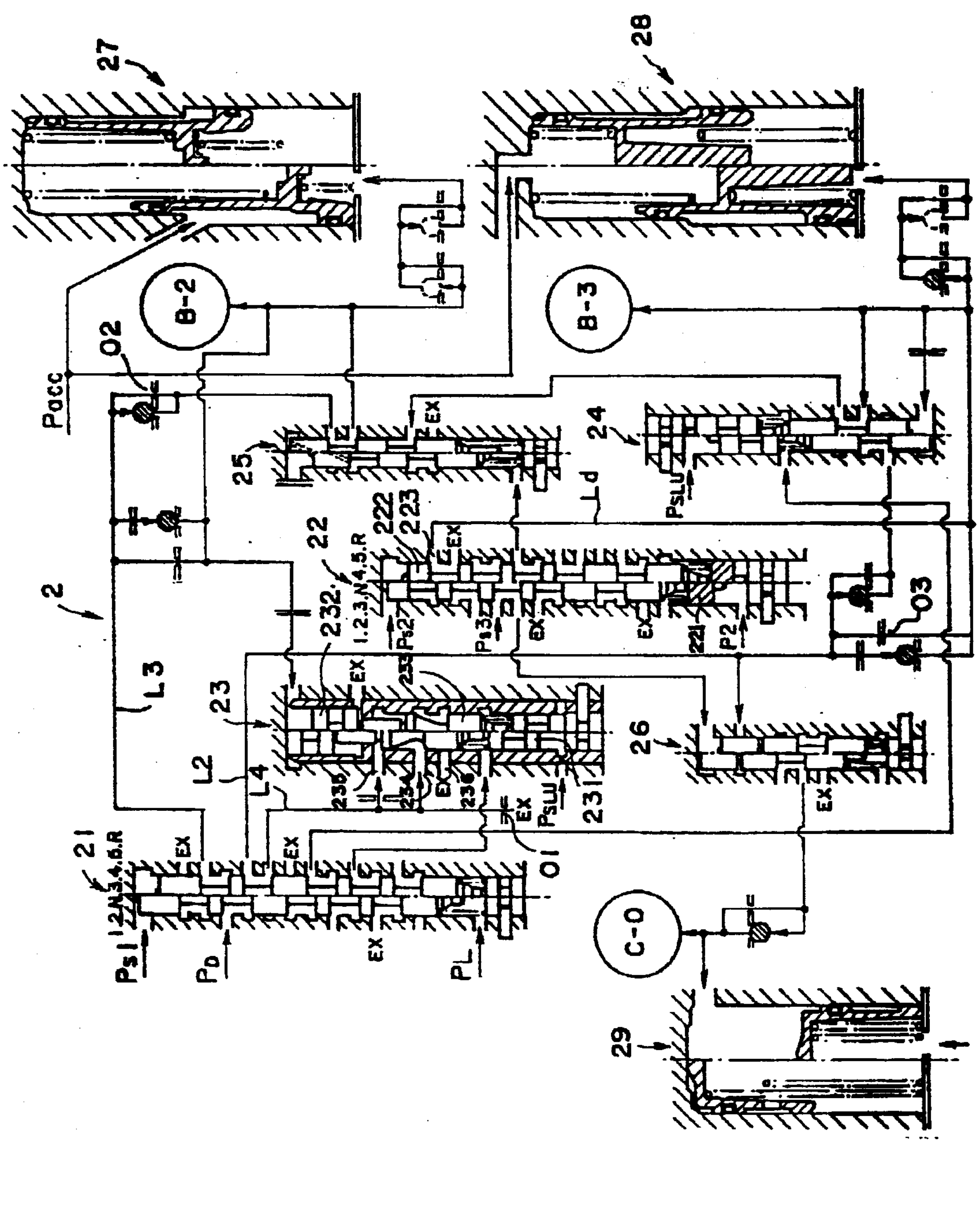
27
28
B-2
B-3
C-0
Pacc
O2
O3
O1
2
L2
L3
L4
Ld
21
22
23
24
25
26
29
EX
P2
221
222
223
231
232

Fig.2

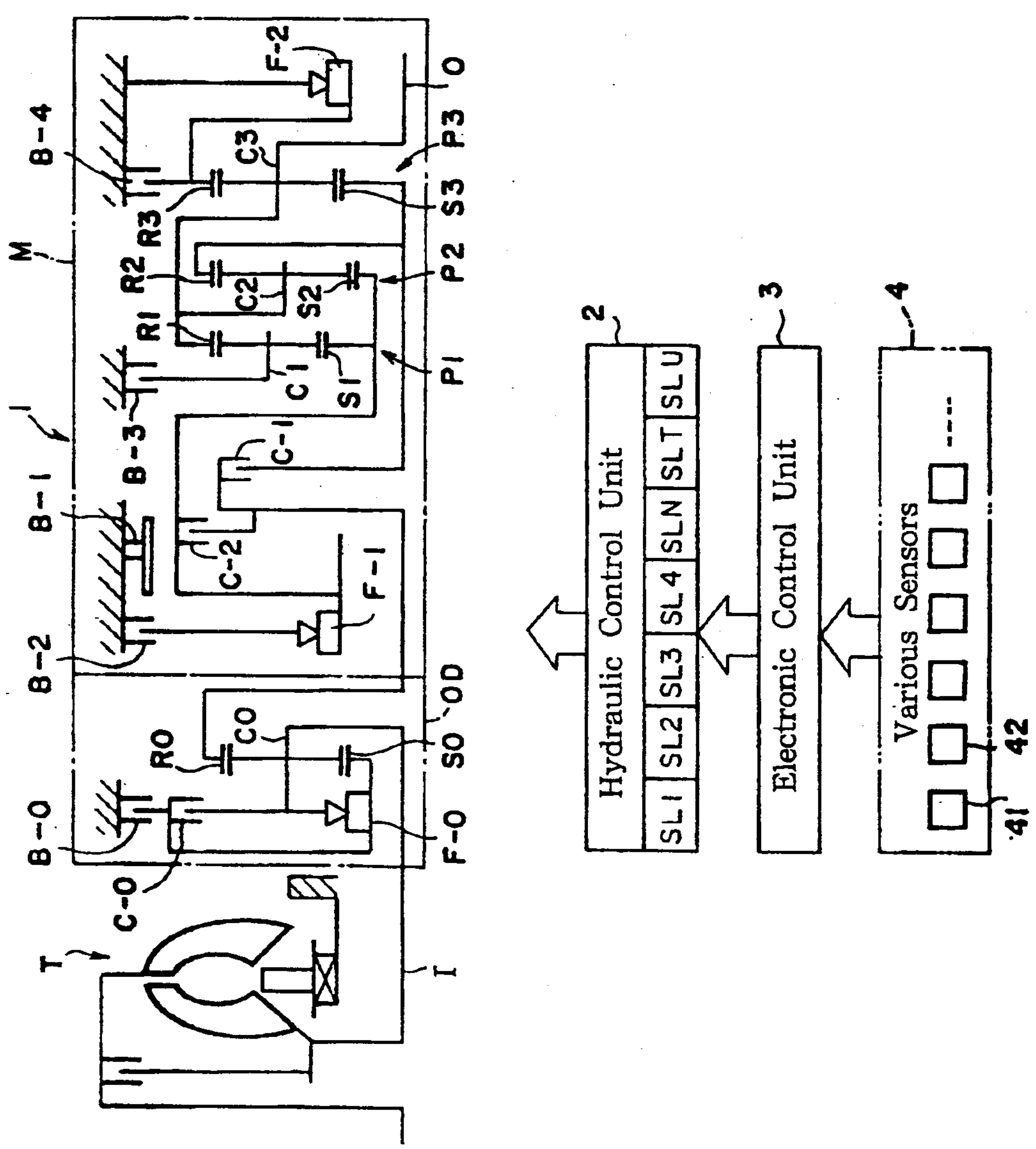
Hydraulic Control Unit
SL1
SL2
SL3
SL4
SLN
SLT
SLU
Electronic Control Unit
Various Sensors
2
3
4
41
42
T
C-0
B-0
F-0
R0
C0
S0
0D
B-2
B-1
B-3
F-1
C-2
C-1
C1
S1
R1
P1
C2
R2
S2
P2
R3
C3
S3
P3
B-4
F-2
M
I
O
1

# Fig.3

| | C-0 | C-1 | C-2 | B-0 | B-1 | B-2 | B-3 | B-4 | F-0 | F-1 | F-2 |
|---|---|---|---|---|---|---|---|---|---|---|---|
| N | | | | ○ | | | | | | | |
| Rev. | | | ○ | ○ | | | | ○ | | | |
| 1st | ○ | ○ | | | | | | ● | ○ | | ○ |
| 2nd | ● | ○ | | | | | ○ | | ○ | | |
| 3rd | ○ | ○ | | | ● | ○ | | | ○ | ○ | |
| 4th | ○ | ○ | ○ | | | ◎ | | | ○ | | |
| 5th | | ○ | ○ | ○ | | ◎ | | | | | |

# Fig.4

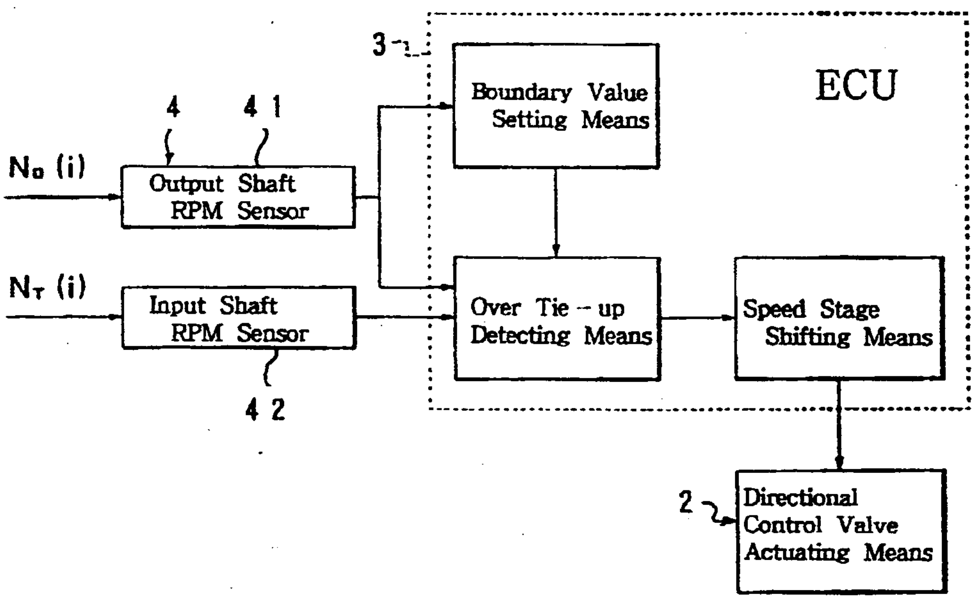

Fig.5

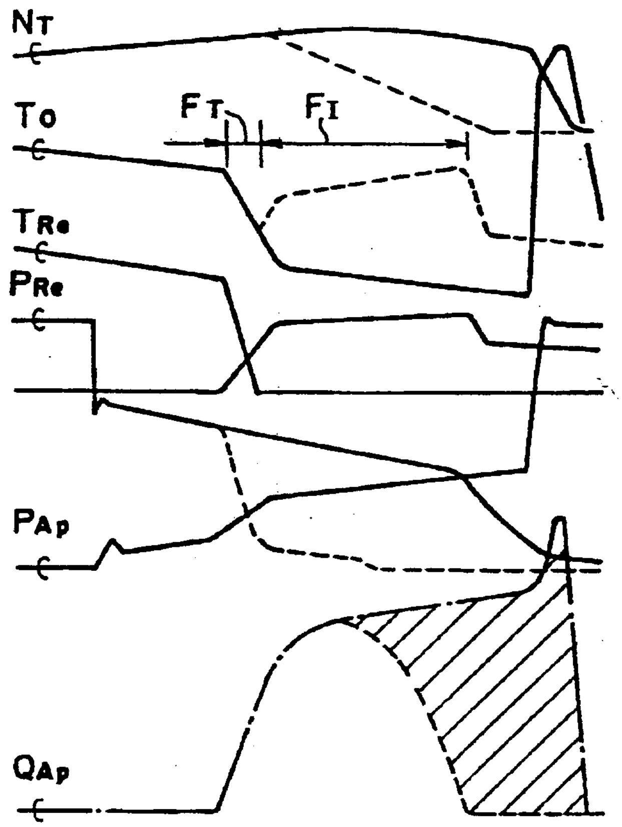
NT
To
FT
FI
TRe
PRe
PAp
QAp

Fig.6

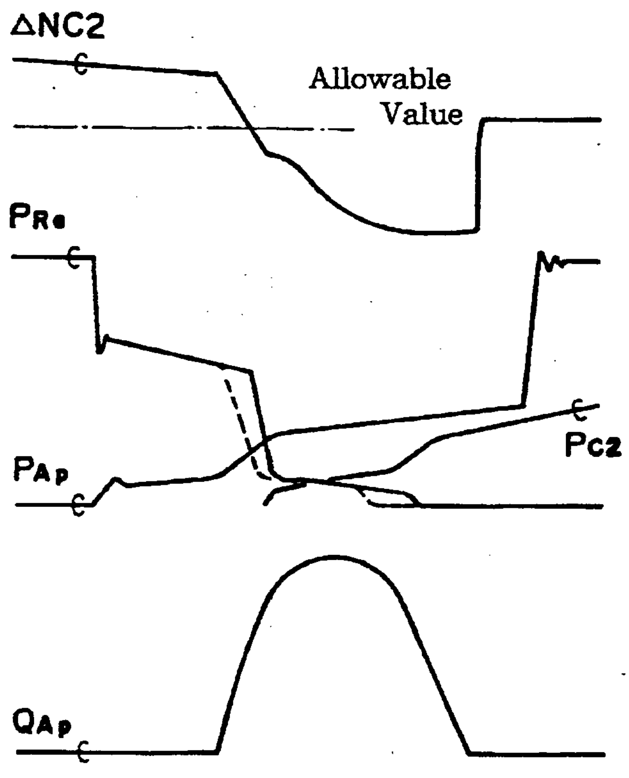
ΔNC2
Allowable
Value
PRe
PAp
Pc2
QAp

Fig.7

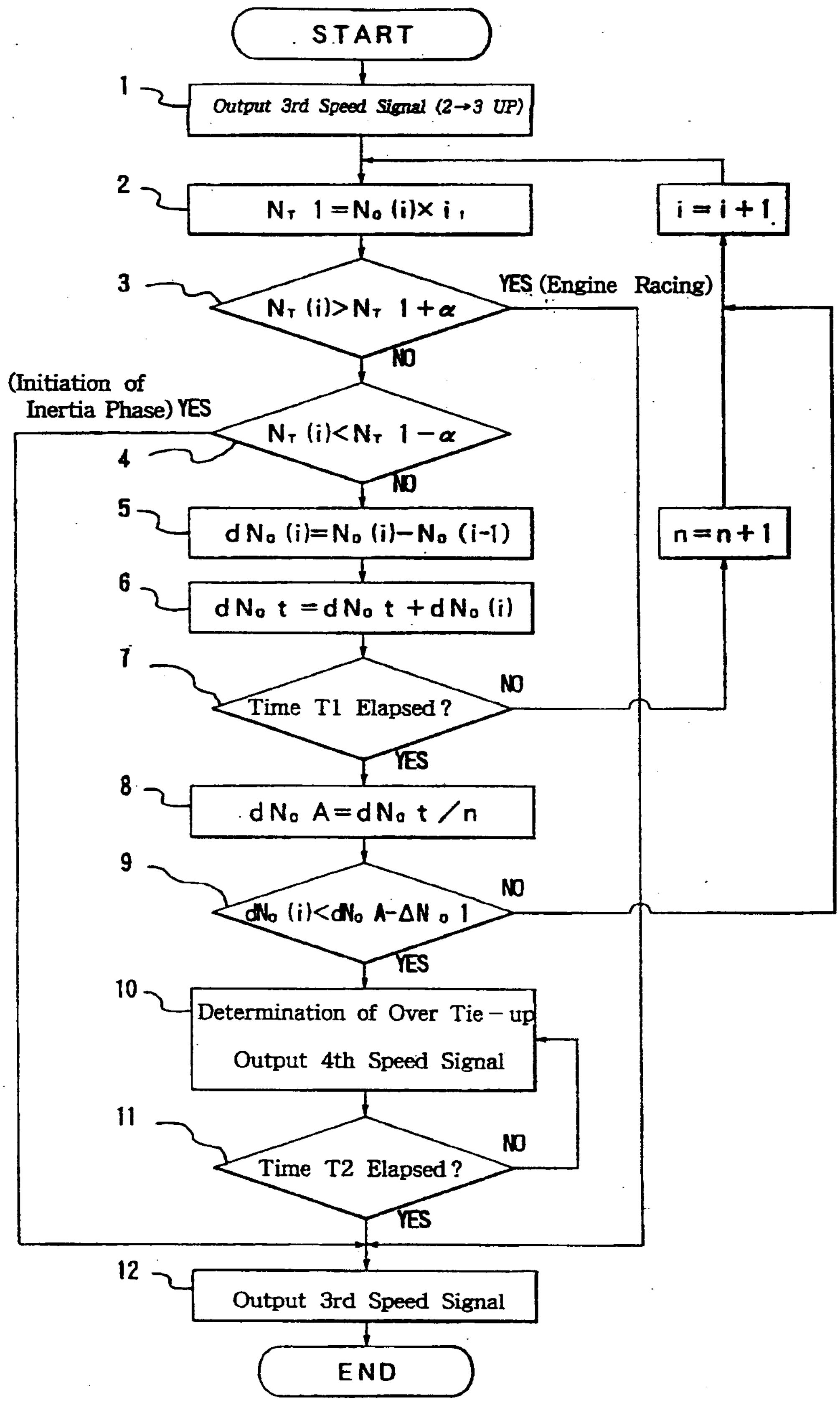
START
1 Output 3rd Speed Signal (2→3 UP)
2 N_T 1 = N_o (i) × i_1
i = i + 1
3 N_T (i) > N_T 1 + α
YES (Engine Racing)
NO
(Initiation of Inertia Phase) YES
4 N_T (i) < N_T 1 − α
NO
5 dN_o (i) = N_o (i) − N_o (i-1)
n = n + 1
6 dN_o t = dN_o t + dN_o (i)
7 Time T1 Elapsed?
NO
YES
8 dN_o A = dN_o t / n
9 dN_o (i) < dN_o A − ΔN_o 1
NO
YES
10 Determination of Over Tie-up
Output 4th Speed Signal
11 Time T2 Elapsed?
NO
YES
12 Output 3rd Speed Signal
END

Fig.8 ( A )

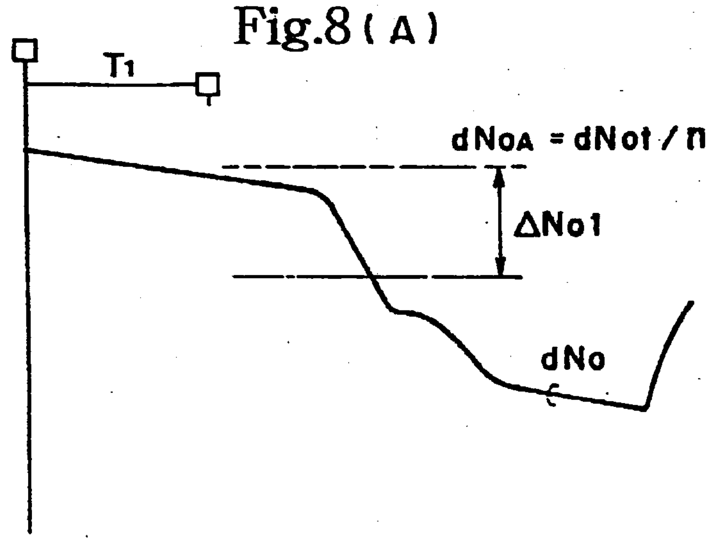


Fig.8 ( B )

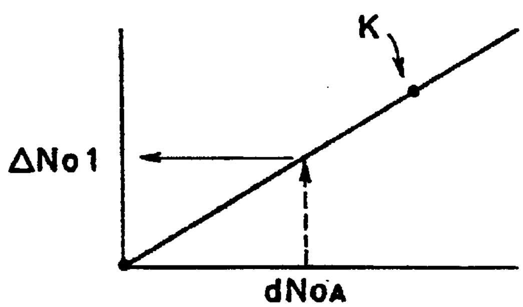


Fig.8 ( C )